# EUROPEAN PATENT SPECIFICATION

(11) **EP 0 721 433 B1**
(45) Date of publication and mention of the grant of the patent: **23.04.1997**
(21) Application number: 94929308.8
(22) Date of filing: 22.09.1994
(51) Int. Cl.: C03C 25/02, C08J 5/08

(54) **FIBER GLASS SIZING COMPOSITIONS, SIZED GLASS FIBERS AND METHODS OF USING THE SAME**
FASERGLASSCHLICHTEZUSAMMENSETZUNGEN, BESCHLICHTETE GLASFASERN UND VERFAHREN ZU DEREN VERWENDUNG
COMPOSITION D'UN AGENT POUR APPRETER LES FIBRES DE VERRE, FIBRES DE VERRE AINSI APPRETEES ET LEUR UTILISATION

(30) Priority: 27.09.1993 US 127202
(43) Date of publication of application: 17.07.1996
(73) Proprietor: PPG INDUSTRIES, INC., Pittsburgh Pennsylvania 15272 (US)
(72) Inventor: KLETT, Michael, Walter, Pittsburgh, PA 15237 (US); MORRIS, Steven, John, Freeport, PA 16229 (US)
(74) Representative: Fleischer, Holm Herbert
(86) International application number: US9410757
(87) International publication number: WO9509133

(56) References cited:
- EP-A- 0 201 691
- US-A- 3 935 344
- US-A- 4 637 956

## Description

### Field of the Invention

The present invention relates to compositions which may be applied as sizings for glass fibers and, more particularly, to aqueous sizing compositions for application to glass fibers for use in reinforcing a thermosetting polymer.

### Background of the Invention

It is well known in the art to use glass fibers to provide increased strength and reinforcement for polymeric materials. Glass fibers are typically produced by drawing molten glass at a high rate of speed from tips of small orifices in a precious metal device or bushing. During the forming and subsequent mechanical and treatment processes, the glass fibers may be broken by contact with each other and processing equipment (i.e., a process known as filamentization). These broken glass fibers (fuzz) may accumulate on processing equipment and/or produce an undesirable non-uniform surface on polymeric articles to which the glass fibers are added.

To protect the glass fibers from interfilament abrasion, a sizing composition is applied to the surface of the glass fibers during the forming process. Typical sizing compositions include components such as film formers, lubricants, coupling agents and emulsifiers. Generally, the sizing composition is applied to a glass fiber strand subsequent to the drawing process and prior to gathering of a plurality of continuous strands on a forming package. The forming packages are dried to remove moisture and cure the sizing composition.

A commercially available glass fiber, Product No. 5528 produced by PPG Industries, Inc. of Pittsburgh, Pennsylvania, is treated with an aqueous sizing composition having an epoxidized thermoplastic copolymer, which may be formed from a monomer having polyurethane condensate repeating units; a self-reacting crosslinking copolymer; at least one organo silane coupling agent; lubricants; emulsifiers and other film formers such as polyvinyl pyrrolidone. While this sizing produces low fuzz glass fibers which may be incorporated into molded polymeric products having good wettability, strength and choppability and which may be readily pigmented, the process of applying the sizing to the glass fibers may be difficult.

Glass fibers may be incorporated into polymeric materials through sheet molding compound ("SMC"), bulk molding compound ("BMC"), thick molding compound ("TMC") processes and other processes for forming high strength glass fiber reinforced molding composites, such as XMC® and HMC® composites, which are commercially available from PPG Industries. Details of the above processes are discussed in U.S. Patent Nos. 4,338,234 and 4,341,877, which are hereby incorporated by reference. Composites produced according to these processes may be used in subsequent conventional molding operations.

The strength of molded products formed from materials produced by the above processes is dependent in part upon the degree of contact between the polymer and fiber glass. The measure of the flowability of the polymeric matrix material through the glass fiber mass to obtain essentially complete encapsulation of the entire surface of each glass strand by the polymeric material is referred to as "wet-out". If the wet-out is incomplete during this initial processing, subsequent processing and the molding and surface characteristics of the final molded product may be adversely effected. Another measure of the degree of contact between the polymeric material and fiber glass is "wet-through" or "jackstraw", which refers to the speed in which the polymeric material penetrates the mass of glass fiber.

It is desirable to have high degrees of wet-out, wet-through and low sheet loft in molding processes such as those discussed above. Another desirable characteristic for subsequent processing is the prevention of polymer resin squeeze-out and telescoping during manufacture of large rolls of molded material. It is also desirable that articles formed from materials produced by the above processes have an essentially uniform, preferably white, surface which is not marred by fiber prominence, fiber read-through, waviness, warpage or clumping.

### Summary of the Invention

The present invention overcomes many drawbacks of conventional sizing compositions by providing an aqueous sizing composition which may be readily applied to at least one glass fiber to provide high wet-out, wet-through and whiteness when used to reinforce a thermosetting polymer. Also, the sizing composition of the present invention provides low polymer resin squeeze-out during subsequent processing to produce articles having low fiber prominence and other advantages such as those discussed above.

One aspect of the present invention is an aqueous sizing composition for at least one glass fiber comprising (a) a non-ionic urethane-modified epoxy thermosetting copolymer; (b) a self-reacting crosslinking polymer selected from the group consisting of a vinyl acetate polymer, polyester, acrylic polymer and mixtures thereof; a thermoplastic Polymer; an organo functional silane coupling agent; a fiber lubricant; and water in an amount sufficient for application of the sizing composition to at least one glass fiber.

Another aspect of the present invention is a method of making a reinforcement having improved strength. The above-discussed aqueous sizing composition is applied to at least a portion of a surface of each of a plurality of glass fibers, which are then dried to form a reinforcement for a thermosetting polymer.

### Description of the Preferred Embodiments

The aqueous sizing composition of the present invention provides glass fiber strands having improved processibility during application of the sizing composition to the strands (i.e., improved binder application efficiency as well as during subsequent processing and molding operations. During subsequent molding operations, this sizing composition provides the glass fibers with enhanced whiteness, wet-out and wet-through characteristics. The sizing composition of the present invention prevents polymer resin squeeze-out and telescoping during manufacture of large rolls of molded material. Articles formed from thermosetting polymeric materials incorporating glass fibers treated with the sizing composition of the present invention have improved strength and a more uniform surface with reduced marring, i.e., fiber prominence, fiber read-through, waviness, warpage or clumping.

The aqueous sizing composition of the present invention comprises non-ionic urethane-modified epoxy thermosetting copolymer, preferably present in the form of an aqueous emulsion or dispersion. Generally, the non-ionic urethane-modified epoxy thermosetting copolymer has an epoxide equivalent weight of about 175 to about 760 and comprises about 50 to about 99 weight percent and, more preferably, about 60 weight percent of a water-based emulsion which preferably contains no organic solvents.

Preferably, the non-ionic urethane-modified epoxy thermosetting copolymer has a backbone having epoxy moieties which is a reaction product of (1) a compound selected from bisphenol-A, bisphenol-F, epoxy novolak, and novolak cresol and (2) an isocyanate functional prepolymer. A non-limiting example of a suitable bisphenol-A compound is Epi-Rez CMD 35201, which is commercially available from Shell Chemical Co. of Houston, Texas. Non-limiting examples of suitable epoxy novolak and bisphenol-F materials are W55-5003 and EPN 862, respectively, each of which is also commercially available from Shell Chemical. Examples of suitable novalac cresol materials are commercially available from Ciba-Geigy of Greensboro, North Carolina and Dow Chemical Co. of Midland, Michigan.

The isocyanate functional prepolymer may be the reaction product of (1) a polymer selected from the group consisting of a mono-, di-, or poly hydroxy functional polyester and a mono-, di-, or poly hydroxy functional polyether and (2) a mono- or diisocyanate, for example. Non-limiting examples of suitable isocyanate functional prepolymers are phenyl isocyanate, toluene diisocyanate, hexamethylene diisocyanate and isophorone diisocyanate.

The presently preferred non-ionic emulsion of a urethane-modified epoxy thermosetting copolymer is Epi-Rez CMD W60-5520, which is commercially available from Shell Chemical. This material is a non-ionic, aqueous dispersion of a urethane-modified epoxy resin having an epoxide equivalent weight of 540 and 60 weight percent solids. The dispersion is thixotropic and contains no organic solvents. CMD W60-5520 can be cured through both epoxy functionality and hydroxyl functionality. The dispersion has a viscosity of about 12,000 centipoise at 25°C as measured using a Brookfield Model RVT, No. 5 spindle at 10 rpm. The dispersion has a density of about 9.2 lb/gal, an average particle size of about 2 microns, a pH of about 4.0 and a vapor pressure at 20°C of less than about 20 mm Hg.

As presently preferred, the non-ionic urethane-modified epoxy thermosetting resin comprises about 20 to about 50 weight percent of the non-aqueous basis and, more preferably, about 28 to sizing composition on about 35 weight percent. One of ordinary skill in the art would understand that one or a plurality of non-ionic urethane-modified epoxy thermosetting resins or emulsions thereof may be used in keeping with the spirit and scope of the present invention.

The aqueous sizing composition of the present invention also comprises a self-reacting crosslinking polymer selected from the group consisting of a vinyl acetate polymer, polyester, acrylic polymer and mixtures thereof. Self-reacting crosslinking polymers are those which are capable of self-reacting or crosslinking at conditions typically encountered during and subsequent to application of the sizing composition to the glass fibers, preferably without the addition of catalysts or other materials to facilitate the crosslinking. Non-limiting examples of preferred self-reacting crosslinking polymers are n-methylolacrylamide vinyl acetate copolymers such as are included in Resyn® 25-2828, an emulsion which is commercially available from National Starch and Chemical Co. of Bridgewater, New Jersey. and PN 3451F and PN-3700P, each of which are commercially available from H. B. Fuller Co. of St. Paul, Minnesota. Resyn® 25-2828 is an aqueous emulsion comprising about 52 weight percent n-methylolacrylamide vinyl acetate copolymer. This emulsion has a pH of about 4.2, an average particle size of about 1.0 micron, the particles having an anionic charge. The viscosity of the emulsion is about 5800 centipoise as measured using a Brookfield Model RVF, Using a No 3 spindle at 20 rpm and 70°F. The density of the emulsion at 72°F is about 9.2 lb./gal.

Other non-limiting examples of suitable self-reacting crosslinking polymers are a melamine formaldehyde-type crosslinker and a polyvinyl acetate, a crosslinking polyvinyl acetate and n-methyl acrylamide (such as Duracet 680 or 681, each of which are commercially available from Franklin International of Columbus, Ohio) a crosslinking acrylic (such as Duracet 627,. which is also commercially available from Franklin) and a self-crosslinking polyvinyl acetate (such as PN-3154F, which is commercially available from H. B. Fuller; Vinac 810L, which is commercially available from Air Products and Chemicals Co. of Allentown, Pennsylvania; and Duracet 622, 640 and 680, each of which is commercially available from Franklin). Non-limiting examples of suitable self-reacting crosslinking polyesters are Stypol 044-7009, 044-5028, 040-5018 and 044-5056, each of which is commercially available from Cook Composites and Polymers of Port Washington, Wisconsin.

The self-reacting crosslinking polymer may comprise about 30 to about 60 weight percent of the sizing composition on a non-aqueous basis and, more preferably, about 40 to about 50 weight percent. Preferably, the ratio on a non-aqueous basis of the urethane-modified epoxy thermosetting copolymer to the self-reacting crosslinking polymer is about 1:4 to about 3:1 by weight.

The sizing composition of the present invention also comprises a thermoplastic polymer, preferably selected from a vinyl acetate-ethylene copolymer, polyvinyl pyrrolidone, acrylic homopolymer and polyvinyl acetate homopolymer. As presently preferred, the thermoplastic polymer is an aqueous emulsion of a vinyl acetate-ethylene copolymer, such as Airflex 300, which is commercially available from Air Products. Airflex 300 is a white emulsion having about 55 weight percent solids and a viscosity of about 1800 to about 2700 centipoise. This emulsion has 0.5 weight percent free vinyl acetate monomer and a pH of about 4.5 to about 5.0. The density of this emulsion is about 8.8 to about 9.0 lb./gal.

Suitable polyvinylpyrrolidones which may be useful in the sizing composition of the present invention include any homopolymer obtained by the addition polymerization of a monomer which may be represented by the formula (I): 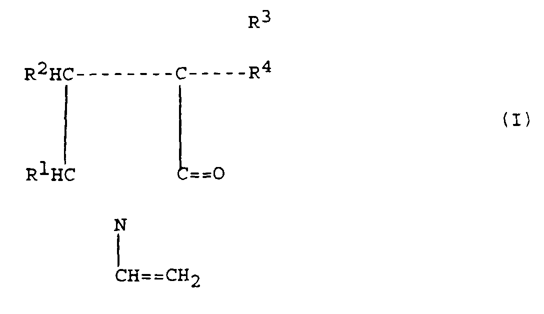 where each of R¹, R², R³ and R⁴ may be independently selected from a hydrogen or a lower alkyl group. Examples of such monomers include N-vinyl-2-pyrrolidones, such as are set forth in U.S. Patent No. 4,518,653, which is hereby incorporated by reference. Examples of suitable polyvinyl pyrrolidones include K-15, K-30, K-60 and K-90, each of which are commercially available from ISP Chemicals of Wayne, New Jersey. Other examples of suitable thermoplastic polymers include acrylic acid, copolymers of acrylate and methacrylate monomers, and styrenes.

Preferably, the thermoplastic polymer comprises about 5 to about 20 weight percent of the sizing composition on non-aqueous basis and, more preferably, about 12 to about 16 percent. A plurality of thermoplastic polymers or copolymers may be included in the sizing composition, as desired.

The sizing composition of the present invention comprises at least one, and preferably a mixture of two, organo functional silane coupling agents. The organo functional silane coupling agent has a reactive moiety on the compound which is free-radically polymerizable, such as an epoxy, vinyl, acrylate, methacrylate or amino group. As presently preferred, the organo functional silane coupling agent is a mixture of gamma-methacryloxypropyltrimethoxysilane and gamma-glycidoxypropyltrimethoxysilane. A suitable gamma-methacryloxypropyltrimethoxysilane for use in the aqueous sizing composition of the present invention is A-174, which is commercially available from Union Carbide Corporation of Danbury, Connecticut. A suitable gamma-glycidoxypropyltrimethoxysilane is A-187, which is also commercially available from Union Carbide Corporation. Another example of a suitable organo functional silane coupling agent is gamma-aminopropyltriethoxysilane. Other examples of suitable organo functional silanes for use in the aqueous sizing composition of the present invention will be evident to those of ordinary skill in the art in view of the foregoing disclosure. Also, one of ordinary skill in the art would understand that one, two or more than two organo functional silane coupling agents may be used in keeping with the spirit and scope of the present invention.

The organo functional silane coupling agent may comprise about 1 to about 8 weight percent of the sizing composition on a non-aqueous basis. Preferably. the sizing composition comprises about 0.5 to about 7.5 weight percent gamma-methacryloxypropyltrimethoxysilane and about 0.5 to about 7.5 weight percent gamma-glycidoxypropyltrimethoxysilane on a non-aqueous basis. More preferably, about 2.8 weight percent gamma-methacryloxypropyltrimethoxysilane and about 1.0 weight percent gamma-glycidoxypropyltrimethoxysilane on a non-aqueous basis are included in the sizing composition.

The fiber lubricant may be any cationic, non-ionic or anionic glass fiber lubricant which reduces the interfilament abrasion between the fibers. As presently preferred, the fiber lubricant is selected from an amine salt of a fatty acid, alkyl imidazoline derivative, acid solubilized fatty acid amide and acid solubilized polyunsaturated fatty acid amide. An example of a suitable acid solubilized fatty acid amide is stearic amide. Suitable fatty acid amides may be saturated or unsaturated and have acid groups of 4 to 24 carbon atoms. Examples of suitable alkyl imidazoline derivatives include alkyl-N-amido alkyl imidazolines which may be formed by the reaction of fatty acids with polyalkylene polyamines. Suitable fatty acid amine salt lubricants may include a fatty acid moiety having 12 to 22 carbon atoms. Amines useful for forming the salt are tertiary amines having alkyl groups of 1 to 22 atoms attached to the nitrogen atom.

More preferred are the fiber glass lubricants selected from a condensate of a fatty acid and polyethyleneimine and an amide substituted polyethyleneimine. An example of a preferred fiber lubricant is Emery 6717, which is a partially amidated polyethylene imine which is commercially available from Henkel Corporation of Kankakee, Illinois. Other examples of suitable Emery fiber lubricants are the products designated 6760 and 4046D. Preferably, the fiber lubricant comprises about 0.5 to about 3.0 weight percent of the sizing composition on non-aqueous basis. More preferably, the fiber lubricant is about 1.4 weight percent on a non-aqueous basis of the sizing composition.

The aqueous sizing composition may further comprise an organic hydrocarbon acid in an amount sufficient to provide the aqueous sizing composition with a pH of about 3 to about 6.5. Non-limiting examples of organic hydrocarbon acids suitable for use in the present invention include mono- and polycarboxylic acids and anhydrides thereof, such as acetic, formic, propionic, caprioc, lactic, benzoic, pyruvic, oxalic acid, maleic, fumaric, acrylic, methacrylic acids and mixtures thereof.

In an alternative embodiment, the sizing composition may also include an aqueous- or non aqueous-based plasticizer. An example of a suitable aqueous-based plasticizer is Carbowax 400, a polyethylene glycol which is commercially available from Union Carbide Co. of Danbury, Connecticut. Examples of suitable nonaqueous-based plasticizers include phthalates, such as dibutyl phthalate; trimellitates, such as trioctyl trimellitate; and adipates, such as dioctyl adipate. The amount of plasticizer may be about 0.5 to about 4 weight percent of the sizing composition on a non-aqueous basis.

Water (preferably deionized) may be included in the aqueous sizing composition in an amount sufficient for application of the sizing composition to at least one glass fiber. Preferably, the weight percentage of solids is about 6 to about 20 weight percent of the aqueous sizing composition. The total amount of the non-aqueous components on a weight percent of non-aqueous components basis generally equals about 100 percent. On a weight basis including water, the total amount of components is also about 100 percent.

The aqueous sizing composition of the present invention may be prepared by any suitable method well known to those of ordinary skill in the art. Preferably, each component is diluted in deionized water in a separate tank and well mixed before being combined with the other components in main mixing tank. The organo functional silane coupling agent(s) may be at least partially hydrolyzed by reaction with the organic hydrocarbon acid in the presence of water. After each of the premixed ingredients is added to the main mix tank, sufficient water is added to provide the aqueous sizing composition with a total solids content of about 6 to about 20 weight percent.

The aqueous sizing composition of the present invention may be applied to any type of fiberizable glass composition known to those of ordinary skill in the art. Nonexclusive examples of suitable fiberizable glass compositions include "E-glass", "621-glass", "A-glass", "C-glass", "S-glass" and lower free fluorine and or boron derivatives thereof. The aqueous sizing composition may be applied by contacting at least a portion of each glass fiber strand emanating from a bushing with a roller-type applicator bearing the sizing composition or by any method well known to those of ordinary skill in the art.

The fibers having the sizing composition applied thereto may be gathered together to form a strand of a plurality of fibers. The strand may be wound onto a forming package placed on a rotating collet. The forming package may be removed from the collet and dried in an oven to produce glass fiber strands having a dried residue of the sizing composition thereupon. The drying temperature will depend upon such variables as the percentage of solids in the sizing composition, components of the sizing composition and type of glass fiber. The sizing composition provides glass fiber strand having about 0.8 to about 2.2 weight percent of the dried sizing composition on the strand based upon total weight of the glass and dried sizing composition. The strands may be transferred from the forming package and combined with a plurality of other strands to form a roving. The roving may be used in the form of continuous strands, woven glass fiber strand mat or chopped glass fibers to reinforce a thermosetting polymer, as desired by any method known in the art.

Glass fibers having the sizing composition of the present invention applied thereto may be used to reinforce any thermosetting polymer, including but not limited to polyesters, vinyl esters, epoxies, alkyd resins and urethanes. Examples of suitable thermosetting polymers include the Phase Alpha polyester resin system (Aropol 50405), a class A SMC formulation commercially available from Ashland Chemical Inc. of Columbus, Ohio; Reichhold polyester system, a structural SMC application commercially available from Union Carbide; and Aropol 7030 low shrink polyester resin system, a pigmentable application which is commercially available from Ashland Chemical.

Roving produced from glass strands having the sizing composition of the present invention applied thereto may be used in any molding process, such as the SMC process discussed above. For use in the SMC process, the glass strands are typically chopped into lengths of about 1 inch to about 2 inches and distributed over a first layer of thermosetting polymeric material, such as are discussed above. A second layer of thermosetting polymeric material is placed over the chopped glass fiber and first layer of thermosetting polymeric material and squeezed to thoroughly mix the glass fiber and polymeric material. Additional alternating layers of glass fibers or polymeric material may be added, as desired. Pigments and other additives well known to those of ordinary skill in the art may be included in the thermosetting polymeric layers.

The present invention will now be illustrated by the following specific, non-limiting examples.

### EXAMPLE 1

An aqueous sizing composition was prepared by mixing each of the components in the amounts set forth in Table 1 to form an aqueous sizing composition according to the present invention.

**TABLE 1**

| COMPONENT | WEIGHT OF COMPONENT (LB) PER 100 GALLONS OF AQUEOUS SIZING COMPOSITION |
|---|---|
| Non-ionic emulsion of an epoxy thermosetting copolymer (CMD W60-5520) | 50.32 |
| | |
| N-methylolacrylamide vinyl acetate copolymer emulsion (Resyn® 25-2828) | 87.10 |
| | |
| Vinyl acetate-ethylene copolymer emulsion (Airflex 300) | 24.22 |
| | |
| Gamma-methacryloxypropyltrimethoxysilane (A-174) | 2.60 |
| | |
| Gamma-glycidoxypropyltrimethoxysilane (A-187) | 0.98 |
| | |
| Partially amidated polyethylene imine (Emery 6717) | 1.30 |
| | |
| Acetic acid | 0.63 |
| | |
| Deionized water | 41.5 gallons |

The above aqueous sizing composition was prepared according to the following procedure. Twenty gallons of water was combined in a conventional mixing tank with 0.63 lb. of acetic acid and 2.60 lb. of gamma-methacryloxypropyltrimethoxysilane (A-174) and stirred vigorously using an Eppenbach mixer to form a homogeneous solution. To this solution was added 0.98 lb of gamma-glycidoxypropyltrimethoxysilane (A-187) with agitation. A fiber lubricant (Emery 6717) in an amount of 1.30 lb. was premixed with 2.5 gallons of hot water (about 120°F-140°F) and added to the organo silane coupling agent solution. To this mixture was added six gallons of water premixed with 50.32 lb. of CMD W60-5520; ten gallons of water premixed with 87.10 lb.
of Resyn® 25-2828; and three gallons of water premixed with Airflex 300. The resulting aqueous sizing composition had about 11.0 weight percent solids and a pH of about 4.5.

The sizing composition was applied to the glass fibers after conventional cooling and thermal conditioning by air and water sprays using a conventional roller-type applicator to K-18 glass fiber strands during forming. Each forming package was dried at a temperature of about 260°F to about 300°F for about 2-15 hours to form glass strand having about 0.8 to about 2.2 percent by weight of dried sizing thereon. After drying, the forming packages were mounted on a creel and transformed into roving.

The roving having glass fiber strands treated with the sizing composition of the present invention (Example 1); samples of 5509 roving (Comparative Example A) and 5528 roving (Comparative Example B) which are commercially available from PPG Industries, Inc.; as well as OC 980, OC 973 and OC 433 sized glass fibers which are commercially available from Owens-Corning Fiberglas Corp. of Toledo, Ohio (Comparative Examples C-E, respectively); and VCT 243 sized glass fiber which is commercially available from Vitrotex-CertainTeed (Comparative Example F) were evaluated to determine loss on ignition (LOI) in weight percent, percent of acetone extraction and end count. The results of these tests are set forth in Table 2.

In addition, each of the above samples were used to produce sheet molding compound (SMC) composites with various thermosetting polymers. Samples of the composites were molded for two minutes at 1000 psi to produce 16" x 16" x 0.100" plaques. Each specimen was evaluated for: tensile strength according to ASTM Method D-3039; flexural strength and flexural modulus according to ASTM Method D-790; notched Izod impact strength and weight percentage of glass. Table 3 presents the results of composites formed using the Phase Alpha polyester resin system (a class A SMC formulation) at a glass content of 30 weight percent, a viscosity of 60 M centipoise, a sheet weight of 18 oz/sq. ft. and a line speed of 20 ft/min. Table 4 presents the results of a computerized surface analysis of panels prepared with the Phase Alpha polyester resin system. The tests were conducted using a LORIA™ surface Analyzer, which is commercially available from Ashland Chemical. A 100 square inch scan of the surface of each test panel was evaluated for Ashland Index to determine the waviness of the panel surface, LORIA™ DOI to determine the fiber read-through, and unpainted Orange Peel, another evaluation of the waviness of the panel surface. Each result reported in Table 4 is the average of the results of tests conducted upon two test panels of each sample.

Table 5 presents the results of composites formed using the Reichhold polyester system (a structural SMC application) at 50 weight percent glass content, a viscosity of 7 M centipoise, a sheet weight of 14 oz/sq. ft. and a line speed of 20 ft/min. Table 6 presents the results of composites formed using Aropol 7030 low shrink polyester resin system (a pigmentable SMC application) at a glass content of 27 weight percent, a viscosity of 12 M centipoise, a sheet weight of 16 oz/sq. ft. and a line speed of 20 ft/min. Table 6 also presents the results of whiteness index tests of roving packages and panels evaluated on a Hunter D25-PC2 colorimeter using a calibration standard of 80.7.

**TABLE 2**

| | | COMPARATIVE EXAMPLES | | | | | |
|---|---|---|---|---|---|---|---|
| | Example 1 | A | B | C | D | E | F |
| Loss on Ignition (%) | 1.95 | 2.15 | - | 2.05 | 1.95 | 2.10 | 2.25 |
| | | | | | | | |
| Acetone Extraction (%) | 52 | 27 | - | 31 | 50 | 75 | 72 |
| | | | | | | | |
| End Count | 61 | 46 | - | 48 | 62 | 54 | 50 |

**TABLE 3**

| Phase Alpha Polyester Resin System | | | | | | | |
|---|---|---|---|---|---|---|---|
| | | COMPARATIVE EXAMPLES | | | | | |
| | Example 1 | A | B | C | D | E | F |
| Wet-through (%) | 85 | 95 | - | 95 | 85 | - | - |
| | | | | | | | |
| Wet-out (%) | 95 | 95 | - | 95 | 95 | - | - |
| | | | | | | | |
| Sheet loft (in) (after 20 min. - no compaction) | 0.135 | 0.190 | - | 0.195 | 0.130 | - | - |
| | | | | | | | |
| Tensile strength (ksi) | 12.4 | 10.7 | - | 11.7 | 12.8 | - | - |
| | | | | | | | |
| Flexural strength (ksi) | 25.2 | 24.9 | - | 24.4 | 25.9 | - | - |
| | | | | | | | |
| Flexural Modulus (MMsi) | 1.41 | 1.48 | - | 1.47 | 1.44 | - | - |
| | | | | | | | |
| Izod Impact (ft lb./in) | 14.7 | 19.1 | - | 17.0 | 15.9 | - | - |
| | | | | | | | |
| Glass Content (wt %) | 26.8 | 28.0 | - | 27.9 | 28.2 | - | - |

**TABLE 4**

| LORIA™ Surface Properties | | | | | | | |
|---|---|---|---|---|---|---|---|
| | | COMPARATIVE EXAMPLES | | | | | |
| | Example 1 | A | B | C | D | E | F |
| Ashland Index | 78 | 82 | - | 88 | 96 | - | - |
| | | | | | | | |
| LORIA™ DOI | 92 | 94 | - | 92 | 92 | - | - |
| | | | | | | | |
| Orange Peel (unpainted) | 9.0 | 9.3 | - | 9.0 | 9.1 | - | - |

**TABLE 5**

| Reichhold Polyester System | | | | | | | |
|---|---|---|---|---|---|---|---|
| | | COMPARATIVE EXAMPLES | | | | | |
| | Example 1 | A | B | C | D | E | F |
| Tensile Strength (ksi) | 22.1 | 18.5 | - | - | 22.8 | - | 20.5 |
| | | | | | | | |
| Flexural Strength (ksi) | 42.1 | 39.3 | - | - | 41.2 | - | 40.3 |
| | | | | | | | |
| Flexural Modulus (MMsi) | 1.95 | 2.01 | - | - | 2.07 | - | 1.83 |
| | | | | | | | |
| Izod Impact (ft lb/in) | 24.2 | 27.7 | - | - | 25.2 | - | 24.6 |
| | | | | | | | |
| Glass Content (wt %) | 50.5 | 51.0 | - | - | 51.0 | - | 51.0 |

**TABLE 6**

| Aropol 7030 Low Shrinkage Polyester Resin System | | | | | | | |
|---|---|---|---|---|---|---|---|
| | | COMPARATIVE EXAMPLES | | | | | |
| | Example 1 | A | B | C | D | E | F |
| Tensile Strength (ksi) | 9.3 | - | - | - | 8.8 | 8.5 | 8.9 |
| | | | | | | | |
| Flexural Strength (ksi) | 19.9 | - | - | - | 17.1 | 20.5 | 19.7 |
| | | | | | | | |
| Flexural Modulus (MMsi) | 1.29 | - | - | - | 1.23 | 1.31 | 1.32 |
| | | | | | | | |
| Izod Impact (ft lb/in) | 7.1 | - | - | - | 8.3 | 6.6 | 7.7 |
| | | | | | | | |
| Glass Content (wt %) (wt %) | 27.1 | - | - | - | 26.9 | 26.9 | 27.1 |
| | | | | | | | |
| Whiteness Index | | | | | | | |
| -Roving Package | 41.2 | 21.8 | 20.5 | - | 18.2 | - | - |
| -Panel | 66.0 | - | - | - | 61.5 | 63.7 | 65.5 |

As shown in Table 3, the SMC molded composite of glass fibers using the sizing of the present invention (Example 1) have slightly higher mechanical properties than those of composites using traditional class A SMC roving. The sizing of the present invention also provides molded composites having comparable wet-out and wet-through and lower fiber prominence than composites prepared using traditional class A SMC roving. The whiteness index of Example 1 of the present invention is far superior to any of the Comparative Examples evaluated. Enhanced whiteness permits the reinforcement to be more easily hidden when pigments are included in the composite. This advantage is highly useful for articles such as sanitary wear and basketball backboards, for example.

### EXAMPLE 2

In an alternative embodiment, an aqueous sizing composition (Example 2) was prepared according to the present invention and compared to several aqueous sizing compositions similar to that used to treat the 5528 roving (Comparative Examples G - L). The formulations of each of Example 2 and Comparative Examples G - L are set forth in Table 7. The component PN-3166-C is an aqueous emulsion of an epoxidized polar thermoplastic copolymer, i.e., epoxidized polyvinyl acetate which is commercially available from H. B. Fuller Co. About 10 to about 15 gallons of each of the sizing formulations listed in Table 7 was prepared. Each sizing formulation was duluted with deionized water to about 15 weight percent solids.

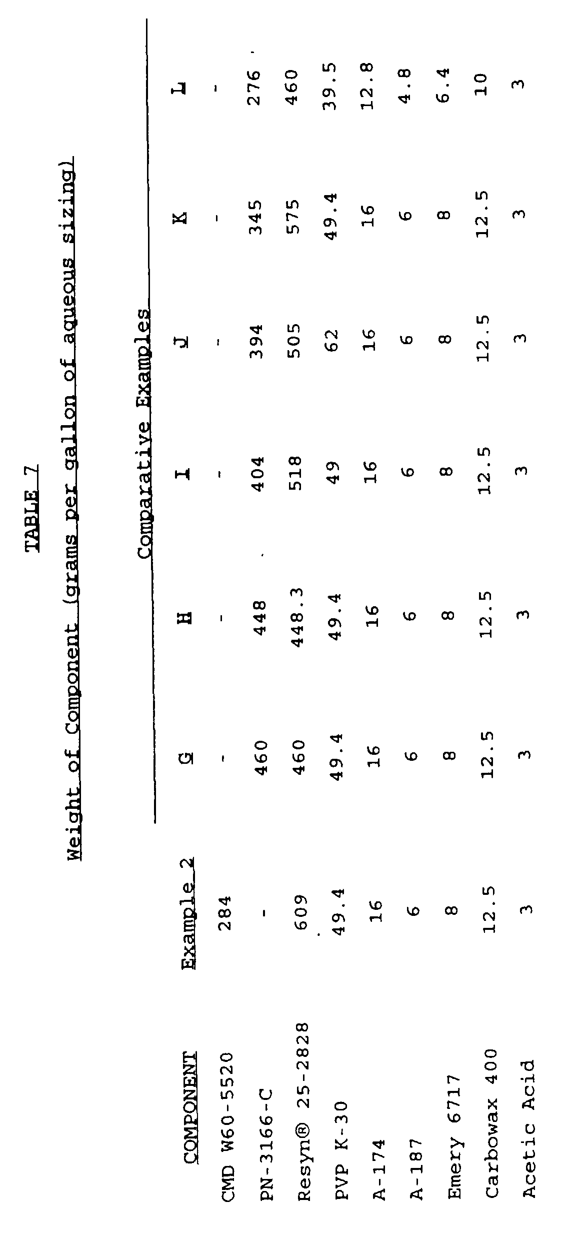

The sizing composition of the present invention and each of the other formulations (Comparative Examples G-L) were applied to glass fibers after conventional cooling and thermal conditioning by air and water sprays using a conventional roller-type applicator to K-18 glass fiber strands during forming. Each forming package was dried at a temperature of about 285°F for about 10 hours to form glass strand having about 0.8 to about 2.2 percent by weight of dried sizing thereon. After drying, each forming package was mounted on a creel and transformed into roving and post-treated at 255°F for 1.5 hours.

The roving having glass fiber strands treated with the sizing composition of the present invention (Example 2) and Comparative Examples G-L were evaluated to determine loss on ignition (LOI) in weight percent and percent of acetone extraction. The results of these tests are set forth in Table 8.

**TABLE 8**

| | | COMPARATIVE EXAMPLES | | | | | |
|---|---|---|---|---|---|---|---|
| | Example 2 | G | H | I | J | K | L |
| Loss on Ignition(%) | 1.98 | 2.03 | 1.8 | 1.96 | 1.8 | 2.14 | 1.5 |
| | | | | | | | |
| Acetone Extraction (%) | 48 | 67.6 | 63 | 62 | 62 | 63 | 62 |

In addition, each of the above samples were used to produce sheet molding compound (SMC) composites with various thermosetting polymers in the manner set forth above in Example 1. Table 9 presents the results of initial and final wet-through, wet-out and tensile strength of composites formed using the Phase Alpha polyester resin system in the manner set forth above in Example 1. Table 10 presents the results of composites formed using the Reichhold polyester system in the manner set forth in Example 1 above.

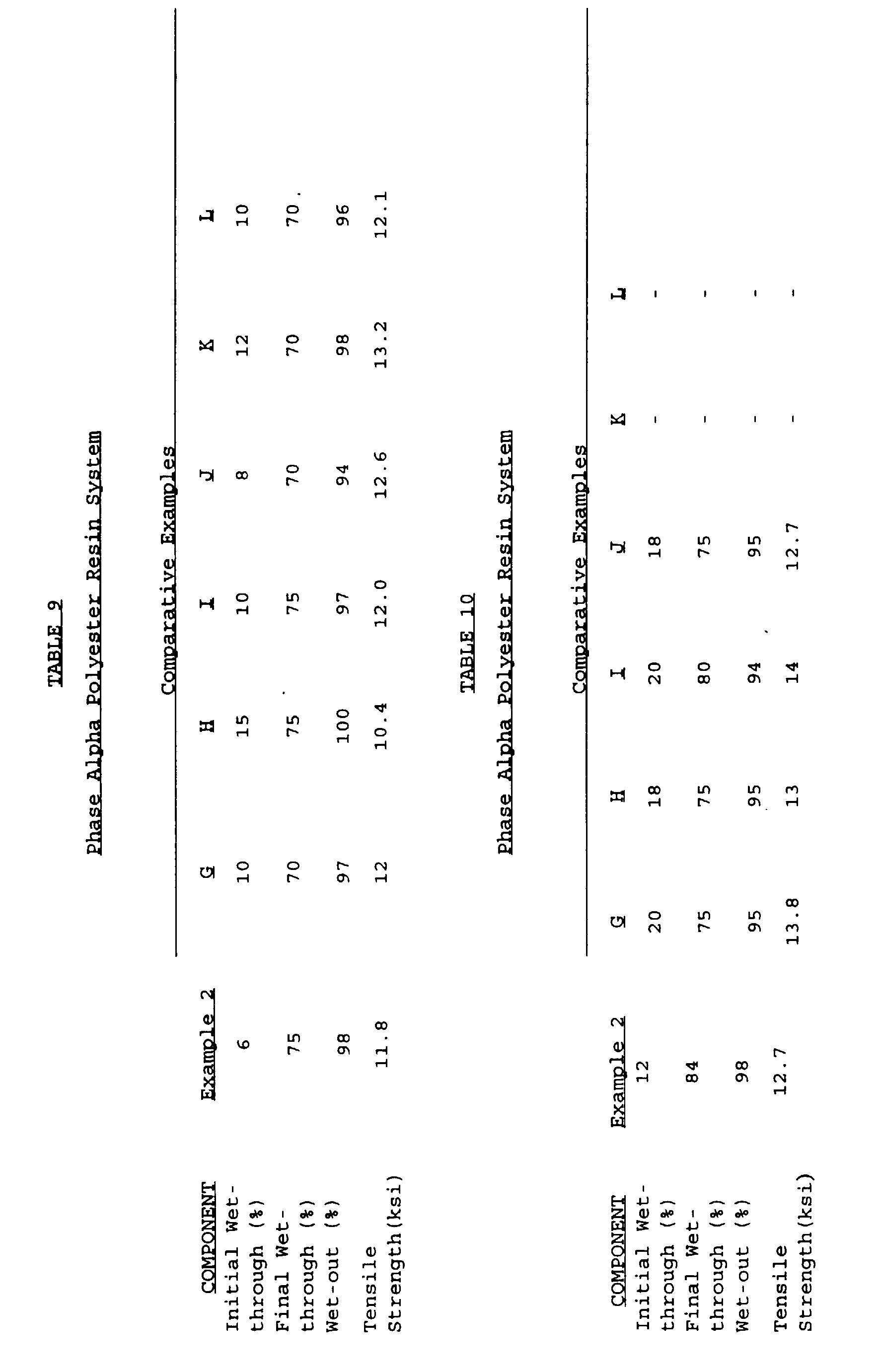

The aqueous sizing composition of the present invention produces glass fiber strands having low fuzz, high wet-out and wet-through performance and enhanced whiteness. When incorporated as reinforcements for thermosetting polymers, glass fibers having the sizing composition of the present invention applied thereto prevent polymer resin squeeze-out and telescoping during manufacture of large rolls of molded material. Articles formed from materials produced using the sizing composition of the present invention have an essentially uniform surface which has reduced marring by fiber prominence, fiber read-through, waviness, warpage or clumping.

## Claims

1. An aqueous sizing composition for at least one glass fiber for use in reinforcing a thermosetting polymer, the composition comprising:
(a) a non-ionic urethane-modified epoxy thermosetting copolymer;
(b) a self-reacting crosslinking polymer selected from the group consisting of a vinyl acetate polymer, polyester, acrylic polymer and mixtures tbereof;
(c) a thermoplastic polymer;
(d) an organo functional silane coupling agent;
(e) a fiber lubricant; and
(f) water in an amount sufficient for application of the sizing composition to at least one glass fiber.

2. The aqueous sizing composition according to claim 1, wherein the urethane-modified epoxy thermosetting copolymer is present in an aqueous emulsion.

3. The aqueous sizing composition according to claim 1, wherein the urethane-modified epoxy thermosetting copolymer has an epoxide equivalent weight of about 175 to about 760.

4. The aqueous sizing composition according to claim 1, wherein the urethane-modified epoxy thermosetting copolymer is about 20 to about 50 weight percent of the sizing composition on non-aqueous basis.

5. The aqueous sizing composition according to claim 1, wherein the self-reacting crosslinking polymer is about 30 to about 60 weight percent of the sizing composition on a non-aqueous basis.

6. The aqueous sizing composition according to claim 1, wherein the ratio on a non-aqueous basis of the urethane-modified epoxy thermosetting copolymer to the self-reacting crosslinking polymer is about 1:4 to about 3:1 by weight.

7. The aqueous sizing composition according to claim 1, wherein the self-reacting crosslinking polymer is a N-methylolacrylamide vinyl acetate copolymer.

8. The aqueous sizing composition according to claim 1, wherein the thermoplastic polymer is about 5 to about 20 weight percent of the sizing composition on a non-aqueous basis.

9. The aqueous sizing composition according to claim 1, wherein the thermoplastic polymer is selected from the group consisting of a vinyl acetate-ethylene copolymer, polyvinylpyrrolidone, acrylic homopolymer and polyvinyl acetate homopolymer.

10. The aqueous sizing composition according to claim 1, wherein the organo functional silane coupling agent has a functional group selected from the group consisting of epoxy, vinyl, acrylate, methacrylate and amino.

11. The aqueous sizing composition according to claim 1, wherein the organo functional silane coupling agent is selected from the group consisting of gamma-methacryloxypropyltrimethoxysilane, gamma-glycidoxypropyltrimethoxysilane and mixtures thereof.

12. The aqueous sizing composition according to claim 1, wherein the organo functional silane coupling agent is about 1 to about 8 weight percent of the sizing composition on a non-aqueous basis.

13. The aqueous sizing composition according to claim 12, wherein the gamma-methacryloxypropyltrimethoxysilane comprises about 0.5 to about 7.5 weight percent of the aqueous sizing composition and the gamma-glycidoxypropyltrimethoxysilane comprises about 0.5 to about 7.5 weight percent of the sizing composition on non-aqueous basis.

14. The aqueous sizing composition according to claim 1, wherein the lubricant is selected from the group consisting of an amine salt of a fatty acid, alkyl imidazoline derivative, acid solubilized fatty acid amide and acid solubilized polyunsaturated fatty acid amide.

15. The aqueous sizing composition according to claim 1, wherein the lubricant is selected from the group consisting of a condensate of a fatty acid and polyethyleneimine and an amide substituted polyethyleneimine.

16. The aqueous sizing composition according to claim 1, wherein the lubricant is about 0.5 to about 3.0 weight percent of the sizing composition on a non-aqueous basis.

17. The aqueous sizing composition according to claim 1, wherein the aqueous sizing composition has a weight percentage of solids of about 6 to about 20.

18. The aqueous sizing composition according to claim 1, further comprising an organic acid to give the aqueous sizing composition a pH of about 3 to about 6.5.

19. The aqueous sizing composition according to claim 1, further comprising a plasticizer.

20. The aqueous sizing composition according to claim 19, wherein the plasticizer is selected from the group consisting of a polyethylene glycol, a phthalate, a trimellitate and an adipate.

21. The aqueous sizing composition according to claim 19, wherein the plasticizer is about 0.5 to about 4 weight percent of the sizing composition on a non-aqueous basis.

22. An aqueous sizing composition for at least one glass fiber for use in reinforcing a thermosetting polymer, the composition comprising:
(a) a non-ionic urethane-modified epoxy thermosetting copolymer;
(b) a self-reacting crosslinking polymer selected from the group consisting of a vinyl acetate polymer, polyester, acrylic polymer and mixtures thereof. wherein the ratio on a non-aqueous basis of the urethane-modified epoxy thermosetting copolymer to the self-reacting crosslinking polymer is about 1:4 to about 3:1 by weight;
(c) about 5 to about 20 weight percent of thermoplastic polymer;
(d) about 1 to about 8 weight percent on a non-aqueous basis of at least one organo functional silane coupling agent;
(e) about 0.5 to about 3.0 weight percent on a non-aqueous basis of a fiber lubricant; and
(f) water in an amount sufficient to give the aqueous sizing composition a weight percentage of solids of about 6 to about 20.

23. A glass fiber having the dried residue of the sizing composition of claim 1.

24. A glass fiber reinforced polymeric article having the glass fiber of claim 23.

25. The glass fiber reinforced polymeric article according to claim 24, wherein the thermosetting polymer which is reinforced is selected from the group consisting of a polyester, vinyl ester, epoxy resin and alkyd resin.

26. A method of making a reinforcement for a thermosetting polymer, the reinforcement having improved strength, comprising:
(a) applying an aqueous sizing composition to at least a portion of a surface of each of a plurality of glass fibers, the aqueous sizing composition comprising:
(1) non-ionic urethane-modified epoxy thermosetting copolymer;
(2) a self-reacting crosslinking polymer selected from a vinyl acetate polymer, polyester, acrylic polymer and mixtures thereof;
(3) a thermoplastic polymer;
(4) an organo functional silane coupling agent;
(5) a lubricant; and
(6) water in an amount sufficient for application of the sizing composition to at least one glass fiber; and
(b) drying the glass fibers to form a reinforcement for a thermosetting polymer.

## Patentansprüche

1. Wäßrige Schlichtenzusammensetzung für wenigstens eine Glasfaser zur Verwendung zum Verstärken eines wärmehärtbaren Polymers, wobei die Zusammensetzung enthält:
(a) ein nichtionisches, urethanmodifiziertes, wärmehärtbares Epoxycopolymer,
(b) ein selbstreagierendes, vernetzendes Polymer, ausgewählt aus der Gruppe, bestehend aus einem Vinylacetatpolymer, Polyester, Acrylpolymer und Mischungen davon,
(c) ein thermoplastisches Polymer,
(d) ein organofunktionelles Silankupplungsmittel,
(e) ein Fasergleitmittel und
(f) Wasser in einer Menge, die zum Aufbringen der Schlichtenzusammensetzung auf wenigstens eine Glasfaser ausreicht.

2. Wäßrige Schlichtenzusammensetzung nach Anspruch 1, wobei das urethanmodifizierte, wärmehärtbare Epoxycopolymer in einer wäßrigen Emulsion vorhanden ist.

3. Wäßrige Schlichtenzusammensetzung nach Anspruch 1, wobei das urethanmodifizierte, wärmehärtbare Epoxycopolymer ein Epoxidäquivalentgewicht von ungefähr 175 bis ungefähr 760 aufweist.

4. Wäßrige Schlichtenzusammensetzung nach Anspruch 1, wobei das urethanmodifizierte, wärmehärtbare Epoxycopolymer ungefähr 20 bis ungefähr 50 Gew.-% der Schlichtenzusammensetzung, bezogen auf nichtwäßrige Bestandteile, ausmacht.

5. Wäßrige Schlichtenzusammensetzung nach Anspruch 1, wobei das selbstreagierende, vernetzende Polymer ungefähr 30 bis ungefähr 60 Gew.-% der Schlichtenzusammensetzung, bezogen auf nichtwäßrige Bestandteile, ausmacht.

6. Wäßrige Schlichtenzusammensetzung nach Anspruch 1, wobei das Verhältnis, bezogen auf nichtwäßrige Bestandteile, von urethanmodifiziertem, wärmehärtbarem Epoxycopolymer zu dem selbstreagierenden, vernetzenden Polymer ungefähr 1:4 bis ungefähr 3:1, bezogen auf Gewicht, beträgt.

7. Wäßrige Schlichtenzusammensetzung nach Anspruch 1, wobei das selbstreagierende, vernetzende Polymer ein N-Methylolacrylamid-Vinylacetat-Copolymer ist.

8. Wäßrige Schlichtenzusammensetzung nach Anspruch 1, wobei das thermoplastische Polymer ungefähr 5 bis ungefähr 20 Gew.-% der Schlichtenzusammensetzung, bezogen auf nichtwäßrige Bestandteile, ausmacht.

9. Wäßrige Schlichtenzusammensetzung nach Anspruch 1, wobei das thermoplastische Polymer aus der Gruppe, bestehend aus Vinylacetat-Ethylen-Copolymer, Polyvinylpyrrolidon, Acrylhomopolymer und Polyvinylacetathomopolymer, ausgewählt ist.

10. Wäßrige Schlichtenzusammensetzung nach Anspruch 1, wobei das organofunktionelle Silankupplungsmittel eine funktionelle Gruppe, ausgewählt aus der Gruppe, bestehend aus Epoxy, Vinyl, Acrylat, Methacrylat und Amino, aufweist.

11. Wäßrige Schlichtenzusammensetzung nach Anspruch 1, wobei das organofunktionelle Silankupplungsmittel ausgewählt ist aus der Gruppe, bestehend aus gamma-Methacryloxypropyltrimethoxysilan, gamma-Glycidoxypropyltrimethoxysilan und Mischungen davon.

12. Wäßrige Schlichtenzusammensetzung nach Anspruch 1, wobei das organofunktionelle Silankupplungsmittel ungefähr 1 bis ungefähr 8 Gew.-% der Schlichtenzusammensetzung, bezogen auf nichtwäßrige Bestandteile, ausmacht.

13. Wäßrige Schlichtenzusammensetzung nach Anspruch 12, wobei das gamma-Methacryloxypropyltrimethoxysilan ungefähr 0,5 bis ungefähr 7,5 Gew.-% der wäßrigen Schlichtenzusammensetzung und das gamma-Glycidoxypropyltrimethoxysilan ungefähr 0,5 bis ungefähr 7,5 Gew.-% der Schlichtenzusammensetzung, bezogen auf nichtwäßrige Bestandteile, ausmacht.

14. Wäßrige Schlichtenzusammensetzung nach Anspruch 1, wobei das Gleitmittel aus der Gruppe, bestehend aus einem Aminsalz einer Fettsäure, Alkylimidazolinderivaten, durch Säure löslich gemachte Fettsäureamide und durch Säure löslich gemachte mehrfach ungesättigte Fettsäureamide, ausgewählt ist.

15. Wäßrige Schlichtenzusammensetzung nach Anspruch 1, wobei das Gleitmittel aus der Gruppe, bestehend aus einem Kondensat einer Fettsäure und Polyethylenimin und einem amidsubstituierten Polyethylenimin, ausgewählt ist.

16. Wäßrige Schlichtenzusammensetzung nach Anspruch 1, wobei das Gleitmittel ungefähr 0,5 bis ungefähr 3,0 Gew.-% der Schlichtenzusammensetzung, bezogen auf nichtwäßrige Bestandteile, ausmacht.

17. Wäßrige Schlichtenzusammensetzung nach Anspruch 1, wobei die wäßrige Schlichtenzusammensetzung einen Gewichtsprozentanteil an Feststoffen von ungefähr 6 bis ungefähr 20 aufweist.

18. Wäßrige Schlichtenzusammensetzung nach Anspruch 1, die weiterhin eine organische Säure enthält, um der wäßrigen Schlichtenzusammensetzung einen pH-Wert von ungefähr 3 bis ungefähr 6,5 zu verleihen.

19. Wäßrige Schlichtenzusammensetzung nach Anspruch 1, die weiterhin einen Weichmacher enthält.

20. Wäßrige Schlichtenzusammensetzung nach Anspruch 19, wobei der Weichmacher aus der Gruppe, bestehend aus einem Polyethylenglykol, einem Phthalat, einem Trimellitat und einem Adipat, ausgewählt ist.

21. Wäßrige Schlichtenzusammensetzung nach Anspruch 19, wobei der Weichmacher ungefähr 0,5 bis ungefähr 4 Gew.-% der Schlichtenzusammensetzung, bezogen auf nichtwäßrige Bestandteile, ausmacht.

22. Wäßrige Schlichtenzusammensetzung für wenigstens eine Glasfaser zur Verwendung zum Verstärken eines wärmehärtbaren Polymers, wobei die Zusammensetzung enthält:
(a) ein nichtionisches, urethanmodifiziertes, wärmehärtbares Epoxycopolymer,
(b) ein selbstreagierendes, vernetzendes Polymer, ausgewählt aus der Gruppe, bestehend aus einem Vinylacetatpolymer, Polyester, Acrylpolymer und Mischungen davon, wobei das Verhältnis, bezogen auf nichtwäßrige Bestandteile, von urethanmodifiziertem, wärmehärtbarem Epoxycopolymer zu dem selbstreagierenden, vernetzenden Polymer, ungefähr 1:4 bis ungefähr 3:1, bezogen auf Gewicht, beträgt,
(c) ungefähr 5 bis ungefähr 20 Gew.-% eines thermoplastischen Polymers,
(d) ungefähr 1 bis ungefähr 8 Gew.-%, bezogen auf nichtwäßrige Bestandteile, wenigstens eines organofunktionellen Silankupplungsmittels,
(e) ungefähr 0,5 bis ungefähr 3,0 Gew.-%, bezogen auf nichtwäßrige Bestandteile, eines Fasergleitmittels, und
(f) Wasser in einer Menge, die ausreichend ist, um der wäßrigen Schlichtenzusammensetzung einen Gewichtsprozentanteil an Feststoffen von ungefähr 6 bis ungefähr 20 zu verleihen.

23. Glasfaser mit dem getrockneten Rückstand der Schlichtenzusammensetzung nach Anspruch 1.

24. Glasfaserverstärkter polymerer Gegenstand mit der Glasfaser nach Anspruch 23.

25. Glasfaserverstärkter polymerer Gegenstand nach Anspruch 24, wobei das wärmehärtbare Polymer, das verstärkt ist, ausgewählt ist aus der Gruppe, bestehend aus einem Polyester, Vinylester, Epoxyharz und Alkydharz.

26. Verfahren zur Herstellung einer Verstärkung für ein wärmehärtbares Polymer, wobei die Verstärkung eine verbesserte Festigkeit aufweist, umfassend:
(a) Aufbringen einer wäßrigen Schlichtenzusammensetzung auf wenigstens einen Teil der Oberfläche einer jeden aus einer Vielzahl von Glasfasern, wobei die wäßrige Schlichtenzusammensetzung enthält:
(1) nichtionisches, urethanmodifiziertes, wärmehärtbares Epoxycopolymer,
(2) ein selbstreagierendes, vernetzendes Polymer, ausgewählt aus einem Vinylacetatpolymer, Polyester, Acrylpolymer und Mischungen davon,
(3) ein thermoplastisches Polymer,
(4) ein organofunktionelles Silankupplungsmittel,
(5) ein Gleitmittel und
(6) Wasser in einer Menge, die zum Aufbringen der Schlichtenzusammensetzung auf wenigstens eine Glasfaser ausreicht, und
(b) Trocknen der Glasfasern, um eine Verstärkung für ein wärmehärtbares Polymer auszubilden.

## Revendications

1. Composition d'ensimage aqueuse pour au moins une fibre de verre à utiliser en vue du renforcement d'un polymère thermodurcissable, ladite composition comprenant :
(a) un copolymère thermodurcissable du type époxy, modifié à l'uréthanne, non ionique;
(b) un polymère réticulant, autoréactif, choisi dans le groupe constitué par un polymère d'acétate de vinyle, un polyester, un polymère acrylique et leurs mélanges;
(c) un polymère thermoplastique;
(d) un agent de couplage du type silane, organofonctionnel;
(e) un lubrifiant pour fibres, et
(f) de l'eau en une quantité qui suffit à l'application de la composition d'ensimage sur au moins une fibre de verre.

2. Composition d'ensimage aqueuse suivant la revendication 1, caractérisée en ce que le copolymère thermodurcissable du type époxy, modifié à l'uréthanne, est présent dans une émulsion aqueuse.

3. Composition d'ensimage aqueuse suivant la revendication 1, caractérisée en ce que le copolymère thermodurcissable du type époxy, modifié à l'uréthanne, possède un équivalent-poids d'époxyde d'environ 175 à environ 760.

4. Composition d'ensimage aqueuse suivant la revendication 1, caractérisée en ce que le copolymère thermodurcissable du type époxy, modifié à l'uréthanne, constitue d'environ 20 à environ 50% en poids de la composition d'ensimage, sur une base non aqueuse.

5. Composition d'ensimage aqueuse suivant la revendication 1, caractérisée en ce que le polymère réticulant, autoréactif, constitue d'environ 30 à environ 60% en poids de la composition d'ensimage, sur une base non aqueuse.

6. Composition d'ensimage aqueuse suivant la revendication 1, caractérisée en ce que le rapport, sur une base non aqueuse, du copolymère thermodurcissable du type époxy, modifié à l'uréthanne, au polymère réticulant, autoréactif, varie d'environ 1:4 à environ 3:1 en poids.

7. Composition d'ensimage aqueuse suivant la revendication 1, caractérisée en ce que le polymère réticulant, autoréactif, est un copolymère du n-méthylolacrylamide et de l'acétate de vinyle.

8. Composition d'ensimage aqueuse suivant la revendication 1, caractérisée en ce que le polymère thermoplastique constitue d'environ 5 à environ 20% en poids de la composition d'ensimage, sur une base non aqueuse.

9. Composition d'ensimage aqueuse suivant la revendication 1, caractérisée en ce que le polymère thermoplastique est choisi dans le groupe constitué par un copolymère de l'acétate de vinyle et de l'éthylène, la polyvinylpyrrolidone, un homopolymère acrylique et un homopolymère du poly(acétate de vinyle).

10. Composition d'ensimage aqueuse suivant la revendication 1, caractérisée en ce que l'agent de couplage du type silane organofonctionnel possède un radical fonctionnel choisi dans le groupe formé par les radicaux époxy, vinyle, acrylate, méthacrylate et amino.

11. Composition d'ensimage aqueuse suivant la revendication 1, caractérisée en ce que l'agent de couplage du type silane, organofonctionnel, est choisi dans le groupe formé par le gamma-méthacryloxypropyltriméthoxysilane, le gamma-glycidoxypropyltriméthoxysilane et leurs mélanges.

12. Composition d'ensimage aqueuse suivant la revendication 1, caractérisée en ce que l'agent de couplage du type silane, organofonctionnel, constitue environ 1 à environ 8% en poids de la composition d'ensimage, sur une base non aqueuse.

13. Composition d'ensimage aqueuse suivant la revendication 12, caractérisée en ce que le gamma-méthacryloxypropyltriméthoxysilane constitue d'environ 0,5 à environ 7,5% en poids de la composition d'ensimage aqueuse et le gamma-glycidoxypropyltriméthoxysilane constitue d'environ 0,5 à environ 7,5% en poids de la composition d'ensimage, sur une base non aqueuse.

14. Composition d'ensimage aqueuse suivant la revendication 1, caractérisée en ce que le lubrifiant est choisi dans le groupe formé par un sel d'amine d'un acide gras, un dérivé d'alkylimidazoline, un amide d'acide gras solubilisé par un acide et un amide d'acide gras polyinsaturé solubilisé par un acide.

15. Composition d'ensimage aqueuse suivant la revendication 1, caractérisée en ce que le lubrifiant est choisi dans le groupe formé par un produit de condensation d'un acide gras et d'une polyéthylèneimine et une polyéthylèneimine amido-substituée.

16. Composition d'ensimage aqueuse suivant la revendication 1, caractérisée en ce que le lubrifiant constitue d'environ 0,5 à environ 3,0% en poids de la composition d'ensimage, sur une base aqueuse.

17. Composition d'ensimage aqueuse suivant la revendication 1, caractérisée en ce que la composition d'ensimage aqueuse comporte un pourcentage pondéral de solides qui varie d'environ 6 à environ 20.

18. Composition d'ensimage aqueuse suivant la revendication 1, caractérisée en ce qu'elle comprend, en outre, un acide organique pour conférer à ladite composition d'ensimage aqueuse un pH d'environ 3 à environ 6,5.

19. Composition d'ensimage aqueuse suivant la revendication 1, caractérisée en ce qu'elle comprend aussi un plastifiant.

20. Composition d'ensimage aqueuse suivant la revendication 19, caractérisée en ce que le plastifiant est choisi dans le groupe formé par un polyéthyléneglycol, un phtalate, un trimellitate et un adipate.

21. Composition d'ensimage aqueuse suivant la revendication 19, caractérisée en ce que le plastifiant constitue d'environ 0,5 à environ 4% en poids de la composition d'ensimage, sur une base non aqueuse.

22. Composition d'ensimage aqueuse pour au moins une fibre de verre à utiliser en vue du renforcement d'un polymère thermodurcissable, ladite composition comprenant :
(a) un copolymère thermodurcissable du type époxy, modifié à l'uréthanne, non ionique;
(b) un polymère réticulant, autoréactif, choisi dans le groupe formé par un polymère de l'acétate de vinyle, un polyester, un polymère acrylique et leurs mélanges, où le rapport sur une base non aqueuse, du copolymère thermodurcissable du type époxy, modifié à l'uréthanne, au polymère réticulant, autoréactif, varie d'environ 1:4 à environ 3:1 en poids;
(c) environ 5 à environ 20% en poids d'un polymère thermoplastique;
(d) environ 1 à environ 8% en poids, sur une base non aqueuse, d'au moins un agent de couplage du type silane, organofonctionnel;
(e) environ 0,5 à environ 3,0% en poids, sur une base non aqueuse, d'un lubrifiant pour fibres, et
(f) de l'eau en une quantité qui suffit à conférer à ladite composition d'ensimage aqueuse, un pourcentage pondéral de solides d'environ 6 à environ 20.

23. Fibre de verre comportant le résidu séché de la composition d'ensimage suivant la revendication 1.

24. Article polymérique renforcé par une fibre de verre, comportant la fibre de verre de la revendication 23.

25. Article polymérique renforcé d'une fibre de verre suivant la revendication 24, caractérisé en ce que le polymère thermodurcissable qui est renforcé est choisi dans le groupe formé par un polyester, un ester vinylique, une résine époxy et une résine alkyde.

26. Procédé de réalisation d'un renforcement pour un polymère thermodurcissable, le renforcement possédant une résistance à la traction améliorée, caractérisé en ce que :
(a) on applique une composition d'ensimage aqueuse à au moins une partie d'une surface de chacune d'une multiplicité de fibres de verre, la composition d'ensimage aqueuse comprenant :
(1) un copolymère thermodurcissable du type époxy, modifié à l'uréthanne, non ionique;
(2) un polymère réticulant, autoréactif, choisi dans le groupe constitué par un polymère d'acétate de vinyle, un polyester, un polymère acrylique et leurs mélanges;
(3) un polymère thermoplastique;
(4) un agent de couplage du type silane, organofonctionnel;
(5) un lubrifiant pour fibres, et
(6) de l'eau en une quantité qui suffit à l'application de la composition d'ensimage sur au moins une fibre de verre, et
(b) on sèche les fibres de verre pour former un renforcement pour un polymère thermodurcissable.
